# EUROPEAN PATENT APPLICATION

(11) **EP 4 439 485 A1**
(43) Date of publication of application: **02.10.2024**
(21) Application number: 23165685.1
(22) Date of filing: 30.03.2023
(51) Int. Cl.: G06V 20/20, G06V 20/59, G06V 20/64

(54) **INTERACTIVE VISION-BASED CHILD SEAT MOUNTING ASSISTANCE**

(71) Applicant: Aptiv Technologies AG, 8200 Schaffhausen (CH)
(72) Inventor: Rehfeld, Timo, 51109 Köln (DE); Hahn, Lukas, 42113 Wuppertal (DE); Zhang, Xuebing, 42119 Wuppertal (DE)
(74) Representative: Bardehle Pagenberg Partnerschaft mbB Patentanwälte Rechtsanwälte

(57) **Abstract**

A computerized method of vision-based child seat mounting assistance in a vehicle is presented. The method comprises detecting an act of installing a child seat in the vehicle based on at least one image of an interior of the vehicle, determining a child seat model type of the child seat to be mounted in the vehicle, and outputting, on a display, an assistance for mounting the child seat in the vehicle based on a three-dimensional reference model of the determined child seat model type.

## Description

### FIELD

The present disclosure generally relates to safety improvements for vehicles and, in particular, to methods and systems of interactive vision-based child seat mounting assistance.

### BACKGROUND

Smart vehicles, such as smart cars, smart busses, and the like, are on their way to significantly improve the safety of passengers. Such smart vehicles may be equipped with onboard cameras and may be capable of capturing images of the vehicle's interior. Those images can then be used, sometimes in combination with other sensors, for different safety related task.

One crucial safety task in a vehicle that is to ensure that child seats are mounted correctly. Although ensuring the physical integrity of the child is paramount, an improperly secured child seat can also compromise the safety of other passengers in the vehicle in the event of an accident.

In order to ensure a correct mounting, mounting aids have been recently developed. Some of these solutions require additional hardware to be either installed on the vehicle's seat prior to mounting the child seat or to be integrated into a special child seat directly. In the alternative, mounting guides have been developed that come with the child seats. However, these approaches add additional costs and/or additional time effort for the vehicle's users.

Hence, there is a need for providing an improved child seat mounting assistance.

### SUMMARY

In this context, methods, systems and computer program products are presented as defined by the independent claims.

More specifically, a computerized method of vision-based child seat mounting assistance in a vehicle is presented. The method comprises detecting an act of installing a child seat in the vehicle based on at least one image of an interior of the vehicle, determining a child seat model type of the child seat to be mounted in the vehicle, and outputting, on a display, an assistance for mounting the child seat in the vehicle based on a three-dimensional reference model of the determined child seat model type.

In embodiments, the method further comprises at least one of applying an object detection algorithm to detect the child seat in the at least one image, determining depth information of the vehicle's interior, obtaining one or more door state signals from the vehicle, and obtaining seat regions and/or doorway regions for the vehicle. In such embodiments, detecting the act of installing the child seat is based on at least one of the information provided by the object detection algorithm, the depth information, the one or more door state signals, and the seat regions and doorway regions.

In further embodiments, determining the child seat model comprises displaying, at the display, a selection option for selecting the child seat model type of the child seat which is to be mounted in the vehicle, and receiving an input of the selected child seat model type. In yet further embodiments, determining the child seat model type comprises determining a list of child seat model types by comparing outputs of the object detection algorithm and/or the depth information with predefined designs of child seat models with respect to size and/or shape, and displaying, at the display, the list of child seat model types.

In further embodiments, the method further comprises receiving the three-dimensional reference model from a remote database according to the determined child seat model type. In additional embodiments, the method further comprises storing the determined child seat model type and the three-dimensional reference model in the vehicle's database. In yet additional embodiments, the method further comprises storing one or more reference images of the child seat model type mounted in the vehicle and corresponding depth information of the interior of the vehicle in the vehicle's database.

In further embodiments, determining the child seat model type comprises determining whether the child seat to be mounted corresponds to a child seat model type stored in a vehicle's database by comparing outputs of the object detection algorithm and/or the depth information with data stored in the vehicle's database and, in response to determining that the child seat to be mounted corresponds to a child seat model type stored in a vehicle's database, determining the respective child seat model type. In additional embodiments, the method further comprises receiving the three-dimensional reference model from the vehicle's database.

In further embodiments, the assistance for mounting the child seat comprises displaying, at the display, a projection of the three-dimensional reference model being correctly mounted on a current two-dimensional camera image of the vehicle's interior. In yet further embodiments, the assistance for mounting the child seat comprises generating a two-and-a-half-dimensional model of the child seat to be mounted by aggregating the information provided by the object detection algorithm and the depth information, and displaying, at the display, a projection of the three-dimensional reference model being correctly mounted and the two-and-a-half-dimensional model of the child seat to be mounted on a rendered three-dimensional visualization of the camera image of the vehicle's interior.

In further embodiments, the display comprises at least one of augmented reality glasses and a vehicle's main display. In yet further embodiments, the assistance for mounting the child seat comprises outputting an audio signal leading to a correct mounting of the child seat based on a target position of the three-dimensional child seat model and a current position of the child seat to be mounted.

Another aspect concerns a system of vision-based child seat mounting assistance in a vehicle, the system implementing the methods as described herein.

A further aspect concerns a vehicle comprising a camera for capturing images, and the system of vision-based child seat mounting assistance as described herein.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a high-level flow-chart of a method for interactive vision-based child seat mounting assistance according to the disclosure.
Fig. 2 presents an example of images showing a child seat mounting act.
Fig. 3A shows an image with a detected child seat; Fig. 3B shows a monocular depth estimation of a vehicle's cabin; Fig. 3C shows a graphic visualization of door states; and Fig. 3D shows seat regions and doorways in an image of a vehicle's interior.
Figs. 4A and 4B present examples of a display for selecting child seat model types according to embodiments.
Fig. 5 is a schematic overview of a vehicle's computing system retrieving a three-dimensional reference model of a child seat.
Fig. 6 depicts two possible processes for generating visual child seat mounting assistance according to embodiments.
Fig. 7 is a possible implementation of the method for interactive vision-based child seat mounting assistance combining multiple embodiments.
Fig. 8A is an example of a vehicle's main display with child seat mounting assistance; and Fig. 8B is an example of augmented reality glasses with child seat mounting assistance.
Fig. 9 presents an interior of a vehicle with possible positions of cameras.
Fig. 10 is diagrammatic representation of a computing system implementing the functionalities described herein.

### DETAILED DESCRIPTION

The present disclosure relates to methods and systems of interactive vision-based child seat mounting assistance. Child seats ensure the safety of children in vehicles in accidents and also during use, e.g., when the brakes have to be applied sharply or a tight curve is being driven. However, a child seat that is mounted incorrectly, that is, not correctly fastened with the seat belts and/or not properly locked into an ISOFIX (international standard for attachment points for child safety seats) system, is not only dangerous for the children fixed to the seat but also for the other passengers in the vehicle.

Although most of the individual passenger cars sold today are equipped with ISOFIX system for locking ISOFIX child seats, neither all seats in the cars are equipped with the ISOFIX system nor do all child seats sold support ISOFIX nor are all ISOFIX child seats universally suitable for each car. Additionally, even if child seats support ISOFIX, there may be different ways to mount the child seat in the ISOFIX system. Moreover, some child seats also have to be fixed with seat belts in addition to the ISOFIX system. In all these cases, child seats have to be differently mounted, e.g., by using the seat belts of the car and/or other straps.

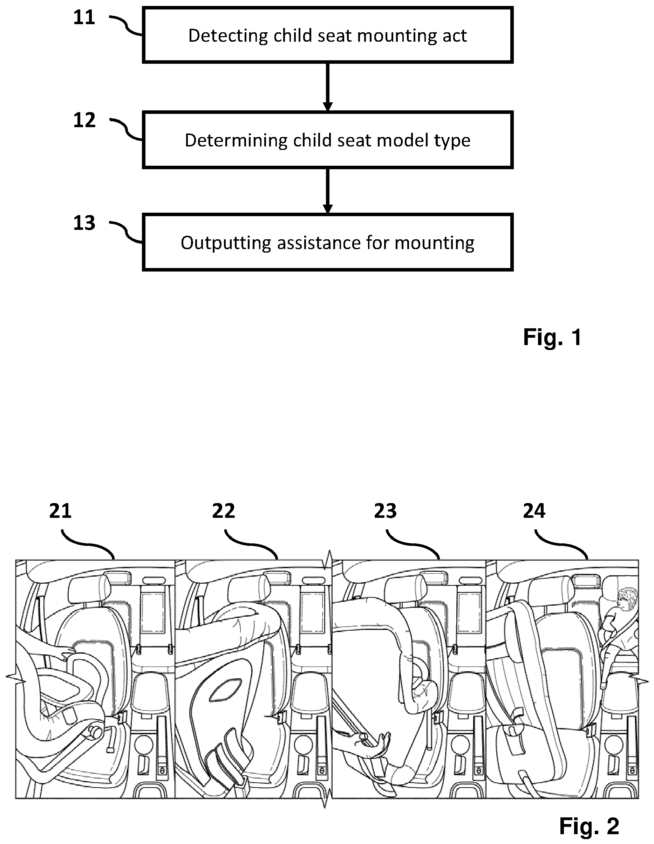

Incorrect mounting of seat belts is one of the most common causes of accidental injury of children. Hence, it is of importance that a passenger of a vehicle, who wants to mount a child seat, mounts the child seat correctly be it with the ISOFIX system, with the seat belt, and/or with other straps. This is achieved by the herein described method and system of interactive vision-based child seat mounting assistance, for which a basic flow chart is depicted in Fig. 1.

The method of Fig. 1 starts with detecting a child seat mounting act in box 11. Detecting the act of installing a child seat in the vehicle is based on at least one image of an interior of the vehicle. Modern vehicles, in particular, cars can be equipped with one or more cameras. These cameras, which may comprise one or more of color or black/which cameras, infrared cameras, depth cameras, and heat cameras, provide images of the vehicle's interior to internal components of the vehicle. The images may be taken in response to a triggering event, e.g., opening a door, interacting with a multi-media system of the vehicle, using a voice command, or the like, or at defined periodic or non-periodic time intervals.

Images of the vehicle's interior may comprise full images showing the whole interior. Alternatively, the images may depict only a partly region of the interior, e.g., one front seat, one or more rear seats, a door region, and such. If a camera captures the whole interior, the images may be preprocessed to extract one or more images crops for one or more regions in the vehicle.

Detecting a child seat mounting act may be based on a sequence of a number of images taken at subsequent time intervals, e.g., every five seconds, one second, 500 milliseconds, 100 milliseconds, or the like. Alternatively, detecting a child seat mounting act may also be determined on information comprise by one image.

Detecting a child seat mounting act may be based on different sources of information. Therefore, an object detection algorithm to detect a child seat in the one or more images may be applied. Additionally or alternatively, depth information of the vehicle's interior may be determined. Additionally or alternatively, one or more door state signals from the vehicle may be obtained. Additionally or alternatively, seat regions and/or doorway regions for the vehicle may be obtained.

For example, if a child seat is detected by an object detection algorithm at a position in which previously was no child seat, a child seat mounting act may be determined. In another example, if the depth information shows indicates in a doorway region a larger object, which can be classified as child seat, a child seat mounting act may be determined. In yet another example, information provided by the object detection algorithm, the depth information, the one or more door state signals, and the seat regions and doorway regions are taken into account when detecting a child seat mounting act.

Generally, detection of a child seat mounting act may be initiated by one or more triggering events, such as opening a door, changing seat occupancy state from empty seat to child seat, detecting a child seat the first time, and the like. Door opening as trigger may only be implemented for any door except the driver's door since a child seat will not be installed on the driver's seat in any case.

The method proceeds with determining a child seat model type to be mounted in the vehicle in box 12. In order to know for which child seat model assistance will be required and provided, the child seat model type is determined. In some embodiments, the child seat model type is determined by displaying, at the display, a selection option for selecting the child seat model type of the child seat which is to be mounted in the vehicle. A user of the vehicle who is trying to mount the child seat or another passenger can than select the child seat model type. For example, the user can manually input (e.g., type in or speak) the name of the child seat model type, can select the name from a list, or the like. In such an example, the method receives an input of the selected child seat model type from the passenger.

In further embodiments, the determining the child seat model type may additionally or alternatively comprise determining a list of child seat model types by comparing outputs of the object detection algorithm and/or the depth information with predefined designs of child seat models with respect to size and/or shape. Hence, the size and/or shape of the child seat to be mounted and detected may be compared with predefined sizes and/or shapes of child seat model types. Such information of sizes and/or shapes may be received from a database stored in a vehicle's computer system or received from a remote database, such as a cloud storage. Generally, a remote database mentioned herein may me a cloud database but may also be any other database that is not included in the vehicle.

The list of one or more child seat model types may then be displayed on a display, e.g., on a vehicle's main display of its entertainment and support system or on another display connected with the vehicle's computing system, such as a mobile device of the passenger or an augmented reality head mounted display or augmented reality glasses. The passenger may then select the child seat model type to be mounted from that list.

In further additional or alternative embodiments, no input of a passenger may be required to determine the child seat model type. In such embodiments, it is determined whether the child seat to be mounted corresponds to a child seat model type, e.g., stored in a vehicle's database or in another remote database, by comparing outputs of the object detection algorithm and/or the depth information with data stored in the vehicle's database or in another remote database. The method may then comprise determining a confidence value that the detected child seat is of a stored child seat model type and, if the confidence value is higher than a threshold value, the stored child seat model type is determined to correspond to the child seat to be mounted.

Such an embodiment is particularly useful if specific child seat model types have already been detected and selected by a passenger at other points in time. Then, the child seat to be mounted and detected is be compared to a limited number of child seat model types, namely those, which have already been detected. If more than one child seat model type is similar to the one to be mounted, e.g., the confidence value of two or more child seat model types is higher that the threshold value, or if no previously determined child seat model type is similar the passenger may again be provided with a list of possible child seat model types.

When having determined the child seat model, the method proceeds with outputting, on a display, an assistance for mounting the child seat in the vehicle as shown in box 13. This assistance is based on a three-dimensional reference model of the determined child seat model type. The display may comprise at least one of augmented reality glasses, a passenger's mobile phone, and a vehicle's main display, i.e., in some embodiments, assistance may also be provided on multiple displays.

The three-dimensional reference model may be received from a remote database according to the determined child seat model type. Such a database may store multiple different three-dimensional reference models for different child seats. For further use, e.g., for determining the child seat model types and obtaining the corresponding three-dimensional reference model of the determined child seat model type as explained before, the three-dimensional reference model may be stored in a vehicle's database.

Storing the three-dimensional reference model in the vehicle's database may also comprise storing one or more reference images of the child seat model type mounted in the vehicle, e.g., images taken currently by the on-board camera, and corresponding depth information of the interior of the vehicle in the vehicle's database. Additionally or alternatively, the three-dimensional reference model may be received directly from the vehicle's database where it may have been stored previously, e.g., at manufacturing or by the method as explained above.

The assistance for mounting the child seat may in some embodiments also comprise displaying, at the display, a projection of the three-dimensional reference model being correctly mounted on a current two-dimensional camera image of the vehicle's interior. Hence, the passenger can see where to place the child seat for mounting. Moreover, the projection may also comprise a projection of how seat belts have to be located on the three-dimensional reference model. As the current two-dimensional camera image also shows the current position of the child seat, the passenger can move the child seat until it overlays completely with the projection of the corresponding model of the child seat.

Additionally or alternative, the assistance for mounting the child seat may comprise generating a two-and-a-half-dimensional model of the child seat to be mounted. This is achieved by aggregating the information provided by the object detection algorithm and the depth information with the current camera image. Such a two-and-a-half-dimensional model is, thus, a three-dimensional model based on two-dimensional data that is aggregated to determine the third dimension. The method then displays, at the display, a projection of the three-dimensional reference model being correctly mounted and the two-and-a-half-dimensional model of the child seat to be mounted on a rendered three-dimensional visualization of the camera image of the vehicle's interior. This is particularly helpful when the assistance may (also) be provided on a three-dimensional display, like augmented reality glasses, a virtual reality head-mounted display, a vehicle's display that is capable of providing a three-dimensional view or the like.

In some further embodiments, the visual assistance may also lead the passenger with arrows to mounting the child seat correctly. Additionally or alternatively, audio signals may be provided to lead the passenger to a correct mounting of the child seat based on a target position of the three-dimensional child seat model and a current position of the child seat to be mounted. For example, the audio system of the vehicle may output a beeping signal that becomes higher or louder if the child seat is moved nearer to the correct position. Other signals are possible, too.

Fig. 2 presents an example of images showing a child seat mounting act, which may be determined, e.g., by an onboard computing system of a vehicle, according to the disclosure. In image 21, the child seat is brought by a passenger or another person into the vehicle, which is a passenger car with five seats in this example. This means, image 21 may be the first image captured by the camera in the vehicle showing the child seat for this specific mounting act. The onboard computing system may initiate capturing pictures of the vehicle's interior at defined time intervals. Additionally, capturing pictures or videos from the vehicle's interior may be triggered by a door state signal for a door being opened.

In image 22, image 23, and image 24, the passenger, who wants to install the child seat, moves the child seat around because, e.g., he/she may not know how to install the child seat or because the child seat can be installed in different orientations. The onboard computing system may determine the act of mounting the child seat on one or more of the images 21, 22, 23, and 24 based on an object detection algorithm, depth information, one or more door state signals, and/or seat regions and doorway regions.

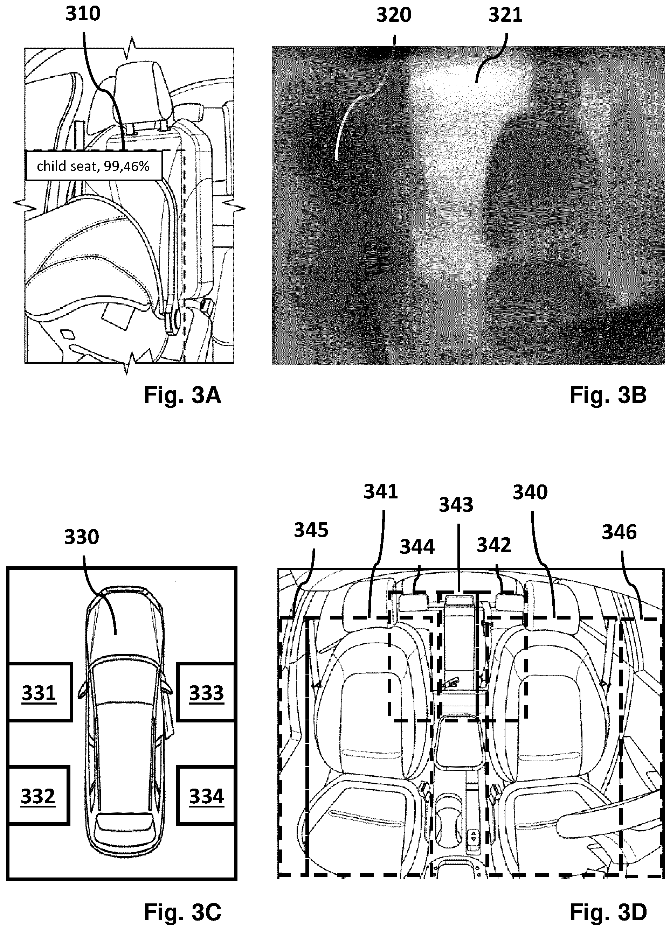

In one example, the act of mounting the child seat may be determined if a child seat is detected on an image of the vehicle's interior the first time or if a child seat is crossing any of defined door regions. Additionally or alternatively, the act of mounting the child seat may be detected if the child seat is detected for more than one image, e.g., based on an object detection algorithm and/or depth information extracted from the imaged. Additionally or alternatively, door state signals may be considered. For example, for determining a child seat mounting act, it may be required that at least one door or the door at the seat, on which a child seat was detected, is indicated as being open with a door state signal. Further example of information used for detecting a child seat mounting act will be given now with respect to Figs. 3A to 3D.

Fig. 3A shows an image with a detected child seat. The image may be taken by an onboard camera. In this example, the image only shows a part of the vehicle's interior, namely, the co-driver's seat. In such an example, there may be multiple cameras, each capturing one or more seats in the car or an image of the whole vehicle's interior may be preprocessed so that one or more image crops are extracted with each showing one or more seats. The object detection algorithm produces a 2D bounding box 310 in the camera image for localized objects and then classifies the detected object. This can be seen at the border of the 2D bounding box 310, which indicates that the detected object is a child seat.

The object detection algorithm may be a machine learning algorithm trained on example images of different object classes. The machine learning algorithm for object detection may be based on a machine learning method like a gradient boosted tree, a random forest, an artificial neural network, a recurrent neural network, a convolutional neural network, an autoencoder, a deep learning architecture, a support vector machine, a data-driven trainable regression model, a k-nearest-neighbor classifier, a physical model, and/or a decision tree, or a combination thereof. The machine learning algorithm for object detection may be trained remotely before use of the vehicle and applied during use of the vehicle. The machine learning algorithm for object detection may also be retrained during use of the vehicle. Use of the vehicle is to be understood as anything that activates the power supply in the vehicle, i.e., unlocking the doors, approaching the vehicle with the key/token for keyless entry systems, driving the vehicle, and the like.

Fig. 3B shows a monocular depth estimation of a vehicle's cabin. Depth estimation is a traditional task in computer vision that can be appropriately predicted by applying numerous procedures. Depth information is extracted from either monocular (single) or stereo (multiple views of a scene) images. Applicable methods for depth estimation range from multi-view geometry methods to methods that directly estimate depth by minimizing the regression loss or by learning to generate a novel view from a sequence. The depth estimation of Fig. 3B is based on a machine learning, e.g., deep learning depth estimation algorithm, which is applied on one or more images of the vehicle's interior.

The output of the depth estimation algorithm is depicted in Fig. 3B. Darker regions, like the region 320, are nearer to the camera and may reflect lower depth values. Lighter regions, like the region 321, are farther away from the camera and may reflect higher depth values. Depth information may provide information for detecting a child seat mounting act, for example, if depth information in a seat region changes from one image to another, this may be an indication of a child seat to be mounted. Moreover, in addition to an object detection algorithm, such as the algorithm as described before, it may provide information as to on which seat the child seat is to be mounted. In other examples, the depth information of the vehicle's interior may additionally or alternatively be based on an output of a sensor, e.g., a time-of-flight camera in the vehicle.

Fig. 3C shows a graphic visualization of door states. A vehicle 330 may be equipped with four door state sensors, one sensor 331 for the left front door, one sensor 332 for the left back door, one sensor 333 for the right front door, and one sensor 334 for the right back door. The sensors may provide the signals to a door state module of the onboard computing system. The module may then determine whether a door has been opened based on a sensor's output, such as the sensor 333 of the right front door. This door state information may in some examples be read directly from the vehicle's Controller Area Network (CAN) bus or similar.

Fig. 3D shows seat regions and doorway regions. These regions may be predefined when manufacturing the vehicle but may also change, for example, when a seat is moved in the vehicle or if new cameras are installed. In the example of Fig. 3D, five seat regions have been defined, namely, driver's seat region 340, co-driver' seat region 341, rear left seat region 342, rear middle seat region 343, and rear right seat region 344. Moreover, two doorway regions may be defined, namely, one region 346 on the right and one region 346 on the left of the vehicle. Additional regions may also be defined but are not depicted. Seat and doorways regions may assist in detecting a child seat mounting act, e.g., as it can be determined on which seat the child seat is to be mounted, whether the child seat has crossed a doorway region for the first time, or the like.

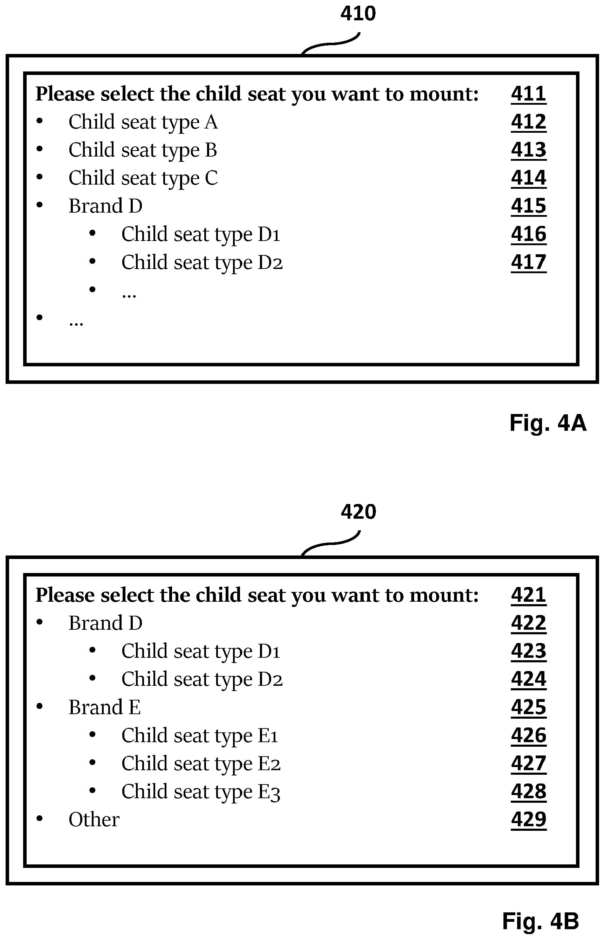

When having detected a child seat mounting act, the method as described herein determines the child seat model type. As explained before, a user may be provided with a selection of multiple child seat model types on a display. Figs. 4A and 4B present examples of such a display for selecting child seat model types according to embodiments.

The display 410 of Fig. 4A indicates in a headline 411 that specifies what information is required from a user. The user shall select a child seat (model type) that should be installed. A selection may be performed by touching the display if the display is a touch display, by speaking the selected child seat model type if voice control is activated, by moving a curser to the child seat model type to be selected, or the like. The list may be preinstalled in the onboard computing system of the vehicle or may be fetched from a remote database. The list may be ordered alphabetically and show all child seat model type names in separate lines as depicted in lines 412, 413, and 414.

Additionally or alternatively, child seat model types may be grouped by their brand as shown in line 415 for "Brand D". The child seat model types of brand D are then depicted in lines 416 and 417 (and possible further lines). The list may be extendable, i.e., only showing brand names at first and on a selection of a brand by the user, the child seat model types relating to that brand will be shown. The child seat model types may not only be listed as words but also small images may be shown next to them. The user may also preview larger images so that he/she can decide easier, which child seat should be mounted.

The display 420 of Fig. 4B, which may be the same or a different display than the one of Fig. 4A, also indicates in a headline 421 that specifies what information is required from a user. The user shall select a child seat (model type) that should be installed. In contrast to Fig. 4A, the list only comprises a subset of all possible child seat model types. The list may be based on the list of possible chid seat model types that is preinstalled in the onboard computing system of the vehicle or that may be fetched from a remote database.

However, not all child seat model types may be presented by only a subset that results from comparing outputs of the object detection algorithm and/or the depth information with predefined designs of child seat models with respect to size and/or shape. Hence, shape and/or size of known child seats, that may be provided with the list of possible child seat model types to the onboard computing system, may be compared with the currently detected child seat, i.e., with the output of the object detection algorithm and/or the depth information of the child seat. Then, only those child seats that are similar to the child seat to be mounted are listed.

This is shown in Fig. 4B. In this example, the child seat detected may be similar (e.g., a similarly value calculated for the shape and/or size may exceed a threshold) to two child seats of brand D (line 422), namely, child seat model type D1 shown in line 423 and child seat model type D2 shown in line 424. Moreover, the child seat detected may also be similar to three child seats of brand E (line 425), namely, child seat model type E1 shown in line 426, child seat model type E2 shown in line 427, and child seat model type E3 shown in line 428. The child seat model types may not only be listed as words but also small images may be shown next to them. The user may also preview larger images so that he/she can decide easier, which child seat should be mounted.

The displays 410 and 420 may also offer to input directly, which child seat model type is to be mounted as shown in line 429 of Fig. 4B. The user of the vehicle may type in or speak the name of the child seat model type. Hence, also voice inputs may be used for determining a child seat model type according to the disclosure. Although the lists of Figs. 4A and 4B are depicted to be shown on a flat display, e.g., on the vehicle's main display of its entertainment and support system or on another display connected with the vehicle's computing system, such as a mobile device of the passenger, the list may also be displayed on an augmented reality head mounted display or augmented reality glasses.

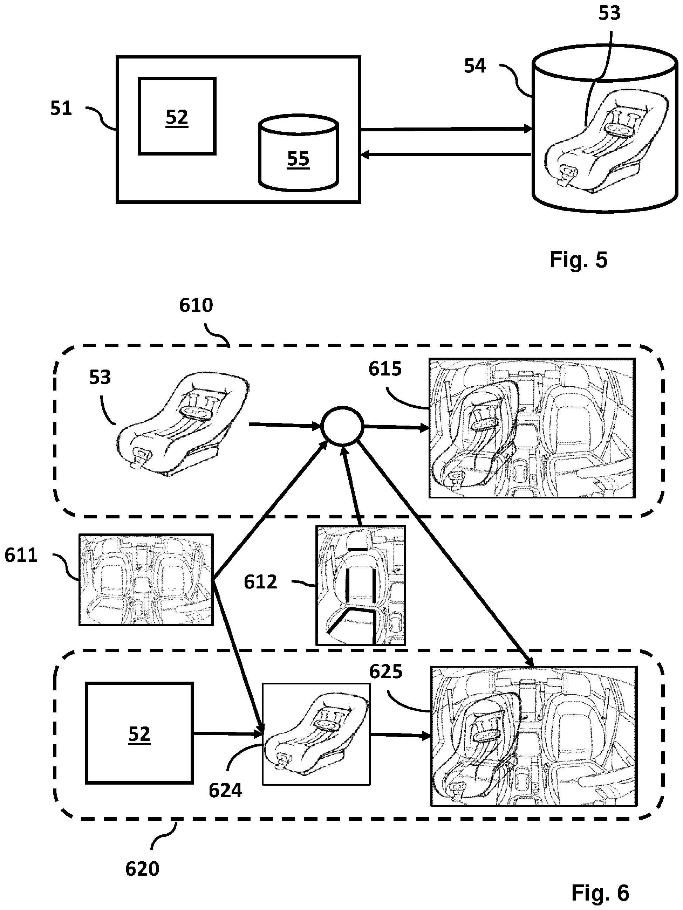

Fig. 5 is a schematic overview of a vehicle's computing system retrieving a three-dimensional reference model of a child seat. The onboard computing system 51 may comprise components 52 for detecting of a child seat mounting act, such as an object detection module, the depth estimation module, a door state module, and/or a seat and doorway region module, which provide the functionalities as described above. The onboard computing system 51 may be connected to a cloud-backend of a remote database 54 to update and download three-dimensional reference models 53 of determined child seat model types. If such a three-dimensional reference model 53 has been downloaded, it may be stored in the vehicle's internal database 55.

In some embodiments, the three-dimensional reference model 53 may only be stored temporally in the internal database 55. In other embodiments, the three-dimensional reference model 53 may be stored for a longer period of time so that the three-dimensional reference model 53 can be fetched more quickly when installing the same child seat for the next time. The internal database 55 may also store one or more reference images of the child seat model type mounted in the vehicle, e.g., images that have been taken after the child seat has been mounted in the vehicle or images from other vehicles or the same type where the same child seat model type has been mounted. Additionally, corresponding depth information of the interior of the vehicle may be stored in the vehicle's internal database 55.

In further embodiments, the vehicle's internal database 55 stores some child seat model type information, such as shape and size of the child seat model types, reference images of child seat model types, or the like. The information may be stored due to previous detected and determined child seat model types or because a user has initiated to add the respective data to the internal database 55. Then, determining the child seat model type as described above may comprise determining whether the child seat to be mounted corresponds to a child seat model type stored in a vehicle's internal database 55 by comparing outputs of the object detection algorithm and/or the depth information, i.e., data provided by components 52, with data stored in the vehicle's internal database 55. In response to determining that the child seat to be mounted corresponds to a child seat model type stored in a vehicle's internal database 55, the respective child seat model type is determined. In such an example, no further input of the user is required. The three-dimensional reference model may then also be received from the internal database 55.

Fig. 6 depicts two possible processes for generating visual child seat mounting assistance according to embodiments. These two processes, a 2D process 610 and a 3D process 620, are not necessarily exclusive but the resulting visual child seat mounting assistances can be provided both to the user(s), e.g., one is provided to one first display, e.g., the vehicle's main display, and the other one to another second display, e.g., augmented reality glasses.

The 2D process 610 receives the three-dimensional reference model 53. The three-dimensional reference model is then projected into the current 2D camera image 611. For the projection to be accurate, information of the position of the seat on which the child seat is to be mounted may be gathered in advance. The system may therefore monitor the relevant seats already in an empty state before any child seat is being mounted. Given a known seat region within the camera image, contour elements and landmarks from the respective seat using e.g., an edge or gradient map can be extracted. In the interior's image 612, those contour elements or landmarks have been indicated with bold lines, namely, key seat lines that define the position of a vehicle's seat. Additionally or alternatively, the car might provide information from electrically adjustable seats, giving the exact position and angles of backrest and seating surface.

In this 2D process 610, the three-dimensional reference model 53 will be projected to a static target position, the way the child seat should ideally be positioned on the seat. The two-dimensional reprojection from the three-dimensional reference model 53 will be overlaid onto the current 2D camera image 611 to be shown as overlaid 2D image 615, e.g., on the main display of the vehicle's user interface. With the help of the visual assistance, the user can adjust the position of the child seat accordingly until the child seat shown in the current 2D camera image 611 matches the projected contours of the three-dimensional reference model 53 in the overlaid 2D image 615.

The 3D process 620 uses the object detection and depth estimation modules in components 52 to generate a 2.5D model 624 of the currently detected child seat. With the depth information, e.g., the depth map of the interior of the vehicle, and the current 2D camera image being aligned, the bounding box of the child seat determined by the object detection algorithm in the current 2D camera image 611 can be applied to the depth map.

To further refine the object inside the rectangular cut-out of the bounding box, 3D clustering methods can be applied to separate the child seat from the car seat and to generate the 2.5D model 624. Alternatively, the image-based object detection could be expanded with a semantic segmentation approach. In further examples, the 2.5D-model may be enriched with information from different angles using consecutive frames in which the child seat is moved by the user. Additionally or alternatively, the three-dimensional reference model may also be taken into account when generating the 2.5D model (not shown).

In this 3D process 620, the estimated 3D position of the child seat being installed will be displayed in a 3D viewer (e.g., on a 2D display or on virtual/augmented reality glasses) together with the static target position where the child seat should end up when correctly mounted. For determining the target position, the current camera image (e.g., the 2D image 611 or a 3D image, which is not shown) and landmarks of the interior's image 612 may be considered. The three-dimensional reference model 53 and the determined 2.5D model 624 of the current child seat's position may then be shown in a rendered 3D visualization 625.

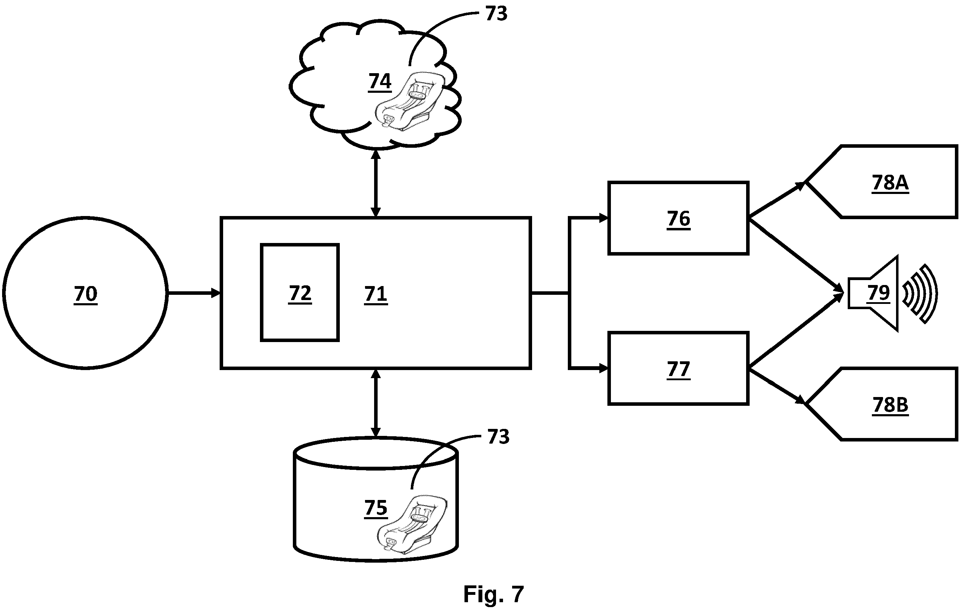

Fig. 7 is a possible implementation of the method for interactive vision-based child seat mounting assistance combining multiple embodiments. In circle 70, a child seat mounting act takes place. This is captured by one or more of the vehicle's cameras. An onboard computing system 51 of the vehicle comprises modules 72, which may comprise at least an object detection module, which is capable of detecting child seats. Additionally, modules for determining depth information, a door state, and/or seat and doorway regions can be provided. The information provided by the one or more modules 72 is used by the onboard computing system 71 to detect the child seat mounting act 70.

After having detected the child seat mounting act 70, the child seat model type to the mounted may be determined. Therefore, the user of the vehicle may be asked to input the child seat model type, presented with a list on a display for selecting one child seat model type, or the like as described herein. The onboard computing system 71 may then query a remote database 74, e.g., via a cloud-backend, for a three-dimensional reference model 74 of the determined child seat model type, which may then be stored in a vehicle's internal database 75 for later use. Additionally, further information, such as reference images of the child seat model type mounted in the vehicle and corresponding depth data of the interior of the vehicle may be stored in the vehicle's internal database 75.

The child seat model type may also be determined by the onboard computing system 71 without input from the user, namely, by comparing child seat model types (or the respective information) stored in the internal database 75 with the information of at least some of the modules 72 as described above.

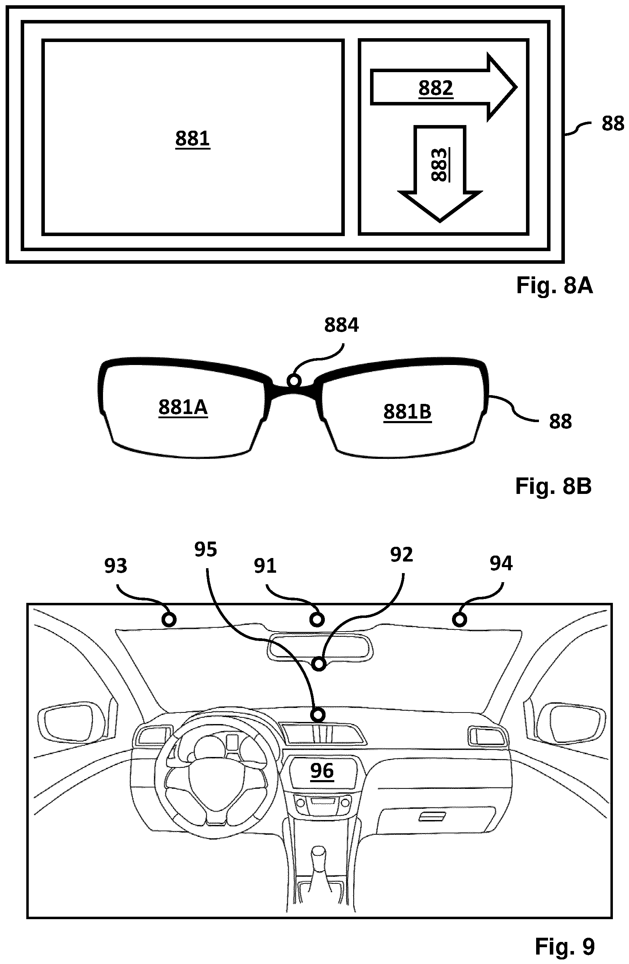

After having received the three-dimensional reference model, either from the remote database 74 or the internal database 75, two different ways of providing visual mounting assistance may be taken. A 2D process 76, which may correspond to the 2D process 610 of Fig. 6, and/or a 3D process 77, which may correspond to the 3D process 620 of Fig. 6, may be executed. The decision, which process(es) to be executed may depend on the display(s) that will be used for assistance. For example, the 2D process 76 may be called if a 2D display without the capability of showing a 3D image is used. The 3D process 77 may be called if a 3D display is used. The visual output may therefore be a 2D output 78A and/or a 3D output 78B. Examples of visual guidance are shown in Figs. 8A and 8B.

Additionally, to the visual guidance, an auditory signal 79 may be provided. Auditory feedback for passengers inside a car has been a proven way of communicating vital information for many years. Whether it transports crucial safety warnings from an automatic braking system or seat belt reminder or helps to translate the detection of the parking sensors, sound is a helpful medium to convey advice without requiring the user to look at a screen. Like the ultrasound beeping when parking into a parking spot or the reminder of seatbelt not being worn while driving, an audio signal for guidance can be used when positioning the child seat in the seat. Improperly mounting may cause a defined auditory response like beeping. Alternatively, a pitch shifting or beep rate change may help in adjusting the positioning. For example, the audio system of the vehicle may output a beeping signal that becomes higher or louder if the child seat is moved nearer to the correct position.

Fig. 8A is an example of a vehicle's main display with child seat mounting assistance. The display 88 may depict on the left-hand side 881 the overlaid image as described with respect to the 2D process 610 of Fig. 6. On the right-hand side, arrows may be depicted showing which direction the child seat should be moved to find its correct position to be mounted. For example, a horizontal arrow 882 points to the right if the child seat has to be moved to the right. Of course, if the child seat shall be moved to the left, the arrow would point to the left. Additionally or alternatively, a vertical arrow 883 points down if the child seat has to be moved downwards. Of course, if the child seat shall be moved upwards, the arrow would point upwards.

Alternatively, only one arrow can be shown that points to the direction, e.g., upwards and to the left. Additionally, distances can also be shown for each direction on the right-hand side. Moreover, text can be provided on the right-hand side that describes mounting assistances from the child seat manufacturer. Additionally or alternatively, the mounting assistances can be outputted as spoken text.

Fig. 8B is an example of augmented reality glasses with child seat mounting assistance. The display 88, which are the glasses, may here depict two versions of a 3D mounting assist as described with respect to the 3D process 620 of Fig. 6, namely, one for the left eye 881A and one for the right eye 881B that are adjusted to provide a 3D view. In the case of augmented reality glasses, the current image may not be reproduced but only the projected three-dimensional reference model may be displayed in the view of the user. In such a case, the 2.5D model may or may not be displayed but it may nevertheless be used to determine assistance, e.g., for determining the direction in which the child seat shall be moved.

Displays 881A and 881B may also depict arrows to lead the wear to a correct mounting of the child seat. Alternative assistances as described herein may be provided, too. Augmented reality glasses may also comprise a camera 884 for capturing images of the user's view. These images may then be used as input for the 3D process 620 of Fig. 6 instead of the current 2D image 611.

Fig. 9 presents an interior of a vehicle with possible positions of cameras and a main display that may be used for child seat mounting assistance according to embodiments described herein.

The vehicle may only comprise one camera but also a plurality of cameras at different positions. The cameras, which may be color or black/which cameras, infrared cameras, depth cameras, heat cameras, or a combination thereof, can be placed, e.g., in the middle over the front windshield and even over the rearview mirror as illustrated with position 91. Additionally or alternatively, the or another camera can be located below the rearview mirror as illustrated with position 92. If one camera is located at position 93, another one will usually also be located at position 94 but this is not mandatory. With two cameras a depth image or 3D image may be created. Additionally or alternatively, the or another camera can be located the dashboard or in the middle console as depicted with position 95. Each of the positions 91 to 95 may also comprise two cameras co-located for enabling a 3D view of the interior of the vehicle.

Cameras may capture images, e.g., at regular time intervals or if trigged by an application that requires to detect, e.g., a child seat mounting act, as described herein. The applications using the images may be executed on the onboard computing system or at least in part executed remotely, e.g., in the cloud. The result of application may trigger display on a vehicle's main display 96 at the middle console. The vehicle's main display may also be located in another position, e.g., at the dashboard behind the steering wheel.

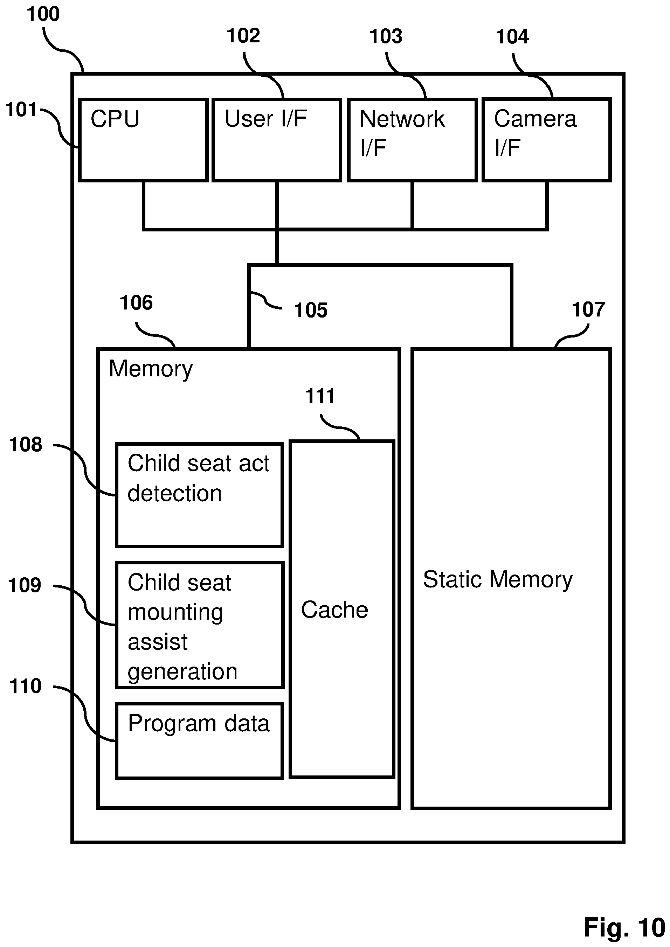

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an onboard camera of the vehicle. Alternatively, the computing system 100 may communicate with the camera via the network interface 103. The camera is used for taking the image. The computing system 100 may also be connected to database systems (not shown) via the network interface, wherein the database systems store at least part of the images needed for providing the functionalities described herein.

The main memory 106 may be a random-access memory (RAM) and/or any further volatile memory. The main memory 106 may store program code for the child seat mounting act detection 108 and for the generation of child seat mounting assistance 109. Other modules needed for further functionalities described herein may be stored in the memory 106, too. The memory 106 may also store additional program data 110 required for providing the functionalities described herein. Part of the program data 110, the child seat mounting act detection 108 and/or the generation of child seat mounting assistance 109 may also be stored in a separate, e.g., cloud memory and executed at least in part remotely. In an exemplary embodiment, the memory 106 may store data about the determined child seat model type saccording to the methods describes herein in a cache 111.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100. The vehicle may also comprise one or more cameras, e.g., connected via the camera interface 104, for capturing one or more images.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of vision-based child seat mounting assistance in a vehicle comprising:
- detecting an act of installing a child seat in the vehicle based on at least one image of an interior of the vehicle;
- determining a child seat model type of the child seat to be mounted in the vehicle; and
- outputting, on a display, an assistance for mounting the child seat in the vehicle based on a three-dimensional reference model of the determined child seat model type.

2. The method of claim 1 further comprising at least one of:
- applying an object detection algorithm to detect the child seat in the at least one image;
- determining depth information of the vehicle's interior;
- obtaining one or more door state signals from the vehicle; and
- obtaining seat regions and/or doorway regions for the vehicle;
wherein detecting the act of installing the child seat is based on at least one of the information provided by the object detection algorithm, the depth information, the one or more door state signals, and the seat regions and doorway regions.

3. The method of any one of the preceding claims, wherein determining the child seat model comprises:
- displaying, at the display, a selection option for selecting the child seat model type of the child seat which is to be mounted in the vehicle; and
- receiving an input of the selected child seat model type.

4. The method of any one of claim 2 or claim 3, wherein determining the child seat model type comprises:
- determining a list of child seat model types by comparing outputs of the object detection algorithm and/or the depth information with predefined designs of child seat models with respect to size and/or shape; and
- displaying, at the display, the list of child seat model types.

5. The method of any one of the preceding claims further comprising receiving the three-dimensional reference model from a remote database according to the determined child seat model type.

6. The method of claim 5 further comprising storing the determined child seat model type and the three-dimensional reference model in the vehicle's database.

7. The method of claim 6 further comprising storing one or more reference images of the child seat model type mounted in the vehicle and corresponding depth information of the interior of the vehicle in the vehicle's database.

8. The method of any one of claims 2 to 7, wherein determining the child seat model type comprises:
- determining whether the child seat to be mounted corresponds to a child seat model type stored in a vehicle's database by comparing outputs of the object detection algorithm and/or the depth information with data stored in the vehicle's database; and
- in response to determining that the child seat to be mounted corresponds to a child seat model type stored in a vehicle's database, determining the respective child seat model type.

9. The method of claim 8 further comprising receiving the three-dimensional reference model from the vehicle's database.

10. The method of any one of the preceding claims, wherein the assistance for mounting the child seat comprises:
- displaying, at the display, a projection of the three-dimensional reference model being correctly mounted on a current two-dimensional camera image of the vehicle's interior.

11. The method of any one of claims 2 to 10, wherein the assistance for mounting the child seat comprises:
- generating a two-and-a-half-dimensional model of the child seat to be mounted by aggregating the information provided by the object detection algorithm and the depth information; and
- displaying, at the display, a projection of the three-dimensional reference model being correctly mounted and the two-and-a-half-dimensional model of the child seat to be mounted on a rendered three-dimensional visualization of the camera image of the vehicle's interior.

12. The method of any one of the preceding claims, wherein the display comprises at least one of augmented reality glasses and a vehicle's main display.

13. The method of any one of the preceding claims, wherein the assistance for mounting the child seat comprises outputting an audio signal leading to a correct mounting of the child seat based on a target position of the three-dimensional child seat model and a current position of the child seat to be mounted.

14. A system of vision-based child seat mounting assistance in a vehicle, the system implementing the method of any one of the preceding claims.

15. A vehicle comprising:
- a camera for capturing images;
- the system of vision-based child seat mounting assistance of claim 14.

16. A computer program product comprising instructions, which, when executed on a computer, cause the computer to perform the method any one of claims 1 to 13.
